# EUROPÄISCHE PATENTANMELDUNG

(11) **EP 1 229 189 A1**
(43) Veröffentlichungstag der Anmeldung: **07.08.2002**
(21) Anmeldenummer: 01102499.9
(22) Anmeldetag: 05.02.2001
(51) Int. Cl.: E05B 1/00, H04M 1/02, G08B 7/00, F21V 33/00

(54) **Türgriff**

(71) Anmelder: Schneider + Fichtel GmbH, 72108 Rottenburg a.N. (DE)
(72) Erfinder: Schneider, Rolf A.O., 72108 Rottenburg (DE)
(74) Vertreter: Dallmeyer, Georg, Dipl.-Ing.

(57) **Zusammenfassung**

Bei einem Türgriff für eine Tür eines Gebäudes mit einem Griffkörper, ist vorgesehen, dass der Griffkörper mindestens eine Kommunikationseinrichtung und/oder mindestens eine Funktionseinrichtung für Türfunktionen aufweist.

## Beschreibung

Die Erfindung betrifft einen Türgriff für eine Tür eines Gebäudes mit einem Griffkörper nach dem Oberbegriff des Anspruchs 1.

Derartige Türgriffe dienen zum Öffnen oder Schießen einer Tür, wobei es beispielsweise aus dem deutschen Gebrauchsmuster 299 06 699 bekannt ist, im Türgriff eine Beleuchtungseinrichtung zu integrieren.

Der Erfindung liegt die Aufgabe zugrunde, einen Türgriff zu schaffen, der eine Vielzahl von kommunikativen und funktionellen Aufgaben in Verbindung mit einem Türsystem übernehmen kann.

Zur Lösung dieser Aufgabe ist vorgesehen, dass der Griffkörper des Türgriffs mindestens eine Kommunikationseinrichtung und/oder mindestens eine Funktionseinrichtung für Türfunktionen aufweist.

Die mindestens eine Kommunikationseinrichtung kann beispielsweise aus einer Wechselsprecheinrichtung oder einer audiovisionellen Überwachungseinrichtung mit einer Videokamera und einem Mikrofon bestehen.

Die mindestens eine Funktionseinrichtung kann beispielsweise eine Türöffnungseinrichtung aufweisen. Eine solche Türöffnungseinrichtung kann aus einer kombiniert mechanisch-elektronischen Schließanlage bestehen, wobei die in den Griffkörper integrierte Türöffnungseinrichtung einen Transponder für ein Codeschloss aufweisen kann.

Desweiteren kann eine Tastatur für das Codeschloss in den Griffkörper integriert sein.

Bei einer vorteilhaften Weiterbildung der Erfindung ist vorgesehen, dass ein Bewegungsmelder in den Griffkörper integriert ist, der der mindestens einen Kommunikationseinrichtung und/oder der mindestens einen Funktionseinrichtung die Anwesenheit einer Person meldet und/oder eine Beleuchtungseinrichtung steuert. Mit Hilfe der Kommunikationseinrichtung kann die Anwesenheit einer Person an eine Kontrollzentrale oder an eine beliebige Stelle im Gebäude z.B. per Funk gemeldet werden. Beispielsweise können Video- und Audiosignale per Funk an eine Empfangsstation oder eine Überwachungseinrichtung übertragen werden. Außerdem können Beleuchtungseinrichtungen im Türbereich oder auch im Türgriff eingeschaltet werden. Diese Beleuchtungseinrichtungen im Türbereich können dazu dienen, den Türeingangsbereich insgesamt zu beleuchten oder auch bestimmte Funktionseinrichtungen im Griffkörper des Türgriffs zu beleuchten, um einen Besucher auf die in den Türgriff integrierten Funktionseinrichtungen und Kommunikationseinrichtungen hinzuweisen. Die Beleuchtungseinrichtungen können auch beispielsweise aus Infrarotleuchtdioden bestehen, so dass eine Videoüberwachung über den Türgriff auch bei Dunkelheit stattfinden kann.

Vorzugsweise ist vorgesehen, dass der Griffkörper eine Bedienkonsole aufweist, in die zumindestens ein Teil der Funktionseinrichtungen und die mindestens eine Kommunikationseinrichtung integriert sind.

Dabei ist vorzugsweise vorgesehen, dass die Bedienkonsole aus Glas besteht. Die Beleuchtungseinrichtung kann in die Bedienkonsole aus Glas integriert sein.

Die Beleuchtungseinrichtung kann auch von einem Dämmerungsschalter ein- bzw. ausgeschaltet werden.

Die Bedienkonsole aus Glas kann für das Codeschloss oder für andere Eingabefunktionen einer Funktions- oder Kommunikationseinrichtung eine Glastastatur aufweisen. Eine derartige Glastastatur besteht beispielsweise aus einer transparenten Trägerscheibe und einer transparenten Dünnglasscheibe, die jeweils elektrisch leitend transparent beschichtet und bei Druckausübung auf die Dünnglasscheibe eine Schaltfunktion ausführen. Die Bedienkonsole kann eine freiprogrammierbare Tastatur zur Steuerung der Kommunikationseinrichtungen und/oder Funktionseinrichtungen aufweisen. Dazu kann die bereits zuvor erwähnte Glastastatur verwendet werden. Eine solche Glastastatur ist beispielsweise in der WO 99/46788 beschrieben.

Der Griffkörper kann ein Personenidentifikationssystem enthalten. Beispielsweise kann eine Personenidentifikation mit Hilfe einer Videoanlage realisiert sein oder aus einem Sensor zum Erfassen von Fingerabdrücken bestehen.

Ein solcher Sensor ist vorzugsweise in die Glasoberfläche der Bedienkonsole integriert sein.

Bei einer Weiterbildung der Erfindung ist vorgesehen, dass die Kommunikationseinrichtungen und die Funktionseinrichtungen modulartig in den Griffkörper einsetzbar sind.

Die Bedienkonsole aus Glas kann ferner einen Monitor für eine audiovisionelle Kommunikationseinrichtung enthalten.

Die Glasoberfläche der Bedienkonsole kann zusätzlich als Schallübertrager verwendet werden, indem die Glasoberfläche an ein Schallwandler angekoppelt wird.

Im folgenden werden unter Bezugnahme auf die Zeichnungen Ausführungsbeispiele der Erfindung näher erläutert.

Es zeigen:
- Fig. 1: eine Tür mit einem aufgesetzten Türgriff,
- Fig. 2: eine als Türgriff verwendbare Bedienkonsole, und
- Fig. 3: ein weiteres Ausführungsbeispiel eines Türgriffs.

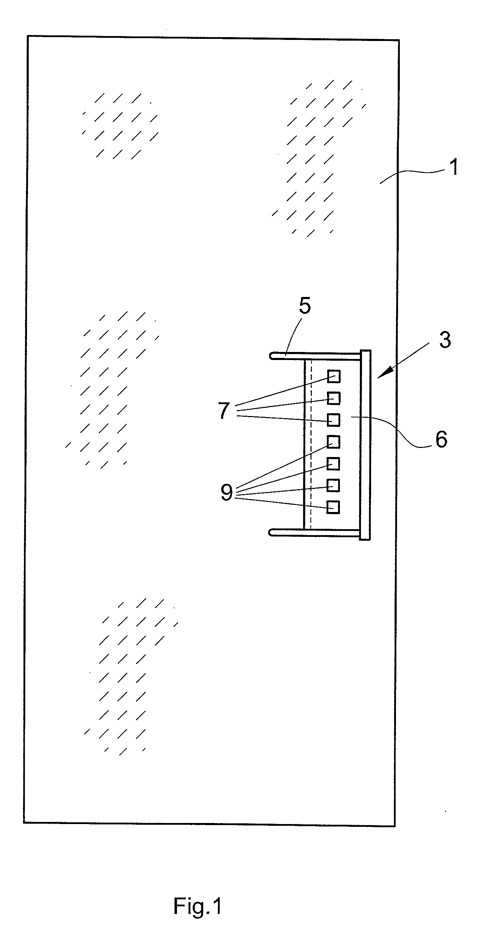

Fig. 1 zeigt eine Glastür, z.B. eine Haustür in einem Eingangsbereich eines Gebäudes, mit einem aufgesetzten Türgriff 3, mit dem die Tür betätigt, z.B. geöffnet oder zugezogen werden kann.

Der Türgriff 3 besteht aus einer Halterung 5, mit der ein Griffkörper 2 des Türgriff 3 auf der Tür 1 befestigt ist. Die Halterung 5 des Türgriffs 3 weist eine von dem Griffkörper 2 aufgenommene Bedienkonsole 6 auf, die vorzugsweise aus Glas besteht und die mehrere Kommunikations- und/oder Funktionseinrichtungen für Türfunktionen aufnimmt. Die einzelnen Kommunikationseinrichtungen 7 bestehen beispielsweise aus einer Wechselsprecheinrichtung 16 oder aus einer audiovisionellen Überwachungseinrichtung mit einer Videokamera 14 und einem Mikrofon 15. Die Kommunikationseinrichtungen können mit einem Bewegungsmelder 17 aktiviert werden.

Die Funktionseinrichtungen 9 für Türfunktionen können aus einer Klingeleinrichtung, einer Türöffnungseinrichtung oder einer kombiniert mechanisch/elektronischen Schließanlage bestehen.

Eine derartige kombiniert mechanisch/elektronische Schließanlage kann ein Codeschloss aufweisen, wobei ein Transponder für dieses Codeschloss in den Türgriff 3 integriert sein kann.

Die Türöffnungseinrichtung bzw. die Schließanlage kann auch mit einem Personenidentifikationssystem gekoppelt sein, wobei das Personenidentifikationssystem aus einer audiovisionellen Personenerkennungsanlage oder einem Fingerabdruck-Sensorsystem 21 bestehen kann.

Beide Personenidentifikationssysteme sind geeignet für eine Integration in die Bedienkonsole 6 aus Glas.

Die Bedienkonsole 6 aus Glas ist vorzugsweise aus mindestens zwei Glasschichten, nämlich einer Trägerglasscheibe und einer Deckglasscheibe aus Dünnglas gebildet, die auf den sich gegenüberliegenden Seiten transparent elektrisch leitend beschichtet sind, so dass die Deckglasscheibe aus Dünnglas als transparente, in Verbindung mit einer Steuerung frei programmierbare Tastaturfläche genutzt werden kann.

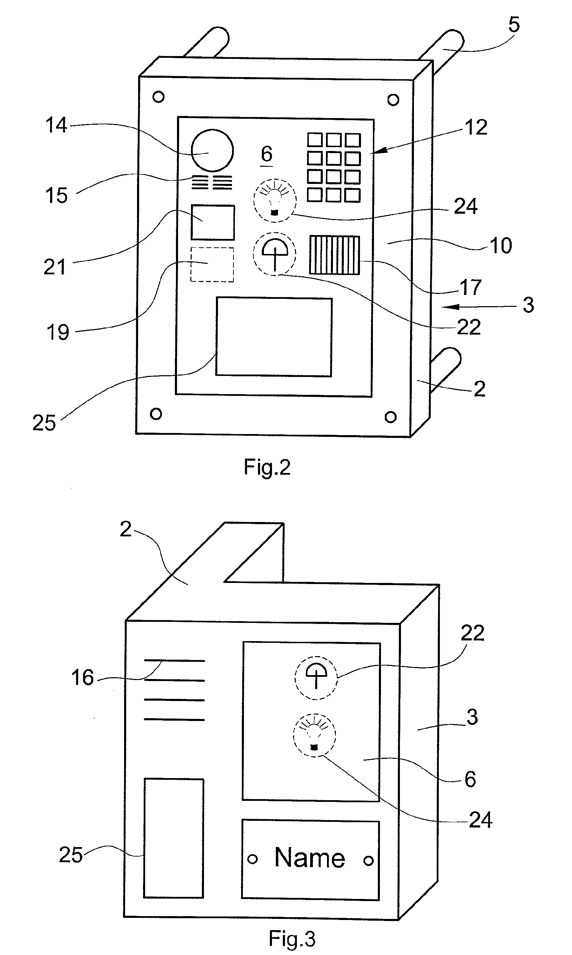

Fig. 2 zeigt ein weiteres Ausführungsbeispiel einer Bedienkonsole 6 aus Glas, deren Griffkörper 2 einen Rahmen 10, z.B. aus Edelstahl, aufweist und der als Türgriff 3 über Halterungen 5 auf eine Tür 1 aufmontiert werden kann.

Die Bedienkonsole 6 zeigt einen in die Glasoberfläche integrierten Klingelknopf 22 als Beispiel einer Funktionseinrichtung 9. Das Symbol für die Funktions- oder Kommunikationseinrichtungen kann auf die Glasoberfläche der Bedienkonsole 6 aufgedruckt sein. Selbstverständlich enthält die Glasfläche eine Vielzahl von anderen Funktionsflächen, beispielsweise auch eine Zehnertastatur 12, mit der ein Codeschloss betätigt werden kann oder mit der andere Kommunikations- und Funktionseinrichtungen 7,9 angesteuert werden können.

Die Glasoberfläche der Bedienkonsole kann auch mit einem Schallwandler 19 gekoppelt sein, so dass die gesamte Glasoberfläche der Bedienkonsole als Schallübertrager, z.B. für eine Wechselsprecheinrichtung 16, verwendet werden kann.

Die Bedienkonsole 6 kann auch eine Videokamera 14 aufnehmen, die aufgrund ihrer Integration in die Glasfläche von außen, insbesondere bei getöntem Glas, nicht ohne weiteres erkennbar ist. Die Bedienkonsole 6 kann auch mit Infrarotbeleuchtungsmittel versehen sein, um eine unbemerkte Beleuchtung für die Videokamera 14 vorzusehen.

Fig. 3 zeigt schließlich ein weiteres Ausführungsbeispiel eines Türgriffs 3, das außer der Bedienkonsole 6 aus Glas noch weitere herkömmliche Funktions- und Kommunikationseinrichtungen 7,9 aufweist, die in dem Griffkörper 2 neben der Bedienerkonsole 6 angeordnet sind.

So ist beispielsweise neben der Bedienkonsole 6 eine Wechselsprecheinrichtung 16 in den Griffkörper integriert. Auf der Bedienkonsole 6 sind lediglich zwei Symbole, nämlich für eine Beleuchtungstaste 24 und eine Klingeltaste 22, stellvertretend für weitere Bedienungsfelder dargestellt. Die Symbole können entweder aufgedruckt sein oder durch eine entsprechende LED-Beleuchtung in die Bedienkonsole 6 aus Glas integriert sein.

Ist der Türgriff 3 auf eine Glastür aufgesetzt, können die erforderlichen Stromanschlüsse für die Stromversorgung und für die Signalleitungen über elektrisch leitende Beschichtungen der Tür 1, z.B. ITO-Beschichtungen, wie sie aus der EP-A-0 995 199 bekannt sind, hergestellt werden.

## Patentansprüche

1. Türgriff für eine Tür (1) eines Gebäudes mit einem Griffkörper (2),
**dadurch gekennzeichnet,**
**dass** der Griffkörper (2) mindestens eine Kommunikationseinrichtung (7) und/oder mindestens eine Funktionseinrichtung (9) für Türfunktionen aufweist.

2. Türgriff nach Anspruch 1, **dadurch gekennzeichnet, dass** die mindestens eine Kommunikationseinrichtung (7) aus einer Wechselsprecheinrichtung (16) besteht.

3. Türgriff nach Anspruch 1 oder 2, **dadurch gekennzeichnet, dass** die mindestens eine Kommunikationseinrichtung (7) aus einer audiovisionellen Überwachungseinrichtung mit einer Videokamera (14) und einem Mikrofon (15) besteht.

4. Türgriff nach einem der Ansprüche 1 bis 3, **dadurch gekennzeichnet, dass** die mindestens eine Funktionseinrichtung (9) aus einer Türöffnungseinrichtung besteht.

5. Türgriff nach Anspruch 4, **dadurch gekennzeichnet, dass** die Türöffnungseinrichtung einen Transponder für ein Codeschloss aufweist.

6. Türgriff nach Anspruch 5, **dadurch gekennzeichnet, dass** eine Zehnertastatur (12) für das Codeschloss in den Griffkörper (2) integriert ist.

7. Türgriff nach einem der Ansprüche 1 bis 6, **dadurch gekennzeichnet, dass** der Griffkörper (2) einen Bewegungsmelder (17) aufweist, der der mindestens einen Kommunikationseinrichtung (7) und/oder der mindestens einen Funktionseinrichtung (9) die Anwesenheit einer Person meldet und/oder eine Beleuchtungseinrichtung steuert.

8. Türgriff nach einem der Ansprüche 1 bis 7, **dadurch gekennzeichnet, dass** der Griffkörper (2) eine Bedienkonsole (6) aufweist, in die die mindestens eine Funktionseinrichtung (9) und/oder die mindestens eine Kommunikationseinrichtung (7) zumindest teilweise integriert sind.

9. Türgriff nach Anspruch 8, **dadurch gekennzeichnet, dass** die Bedienkonsole (6) aus Glas besteht.

10. Türgriff nach Anspruch 8 oder 9, **dadurch gekennzeichnet, dass** die Bedienkonsole (6) aus Glas eine integrierte Beleuchtungseinrichtung aufweist.

11. Türgriff nach Anspruch 10, **dadurch gekennzeichnet, dass** die Beleuchtungseinrichtung von einem Dämmerungsschalter ein- bzw. ausschaltbar ist.

12. Türgriff nach einem der Ansprüche 6 bis 11, **dadurch gekennzeichnet, dass** die Bedienkonsole (6) aus Glas eine Glastastatur (12) für das Codeschloss aufweist.

13. Türgriff nach einem der Ansprüche 1 bis 12, **dadurch gekennzeichnet, dass** der Griffkörper (2) ein Personenidentifikationssystem enthält.

14. Türgriff nach Anspruch 13, **dadurch gekennzeichnet, dass** das Personenidentifikationssystem aus einem Sensor (21) zum Erfassen von Fingerabdrücken besteht.

15. Türgriff nach Anspruch 14, **dadurch gekennzeichnet, dass** der Sensor (21) in die Bedienkonsole (6) aus Glas integriert ist.

16. Türgriff nach Anspruch 1 bis 15, **dadurch gekennzeichnet, dass** die Kommunikationseinrichtungen (7) und die Funktionseinrichtungen (9) modulartig in den Griffkörper (2) integrierbar sind.

17. Türgriff nach einem der Ansprüche 8 bis 16, **dadurch gekennzeichnet, dass** die Bedienkonsole (6) eine frei programmierbare Tastatur (12) zur Steuerung der Kommunikationseinrichtungen und/oder Funktionseinrichtungen (7,9) aufweist.

18. Türgriff nach einem der Ansprüche 8 bis 17, **dadurch gekennzeichnet, dass** die Bedienkonsole (6) aus Glas einen Monitor (25) für eine audiovisionelle Kommunikationseinrichtung aufweist.

19. Türgriff nach einem der Ansprüche 8 bis 18, **dadurch gekennzeichnet, dass** die Glasoberfläche der Bedienkonsole als Schallübertrager verwendet wird.
